Europäisches Patentamt

European Patent Office

Office européen des brevets

(19)

(11) **EP 0 512 099 B1**

(12) **FASCICULE DE BREVET EUROPEEN**

(45) Date de publication et mention
de la délivrance du brevet:
**03.06.1998 Bulletin 1998/23**

(21) Numéro de dépôt: **92900299.6**

(22) Date de dépôt: **15.11.1991**

(51) Int Cl.[6]: **G02F 1/133**, G02B 5/32,
G02B 27/28

(86) Numéro de dépôt international:
**PCT/FR91/00904**

(87) Numéro de publication internationale:
**WO 92/09915 (11.06.1992 Gazette 1992/13)**

(54) **DISPOSITIF DE VISUALISATION**

BILDDARSTELLUNGSGERÄT

DISPLAY DEVICE

(84) Etats contractants désignés:
**DE ES GB IT NL**

(30) Priorité: **23.11.1990 FR 9014620**

(43) Date de publication de la demande:
**11.11.1992 Bulletin 1992/46**

(73) Titulaire: **THOMSON-CSF
75008 Paris (FR)**

(72) Inventeurs:
• **LOISEAUX, Brigitte
F-92045 Paris-La Défense Cédex 67 (FR)**
• **HUIGNARD, Jean-Pierre
F-92045 Paris-La Défense Cédex 67 (FR)**
• **NICOLAS, Christophe
F-92045 Paris-La Défense Cédex 67 (FR)**
• **PUECH, Claude
92045 Paris-La Défense Cédex 67 (FR)**

(74) Mandataire: **Guérin, Michel et al
THOMSON-CSF-S.C.P.I.,
13, Avenue du Président
Salvador Allende
94117 Arcueil Cédex (FR)**

(56) Documents cités:
**WO-A-88/06391          DE-A- 3 829 598
US-A- 4 807 978**

• **PATENT ABSTRACTS OF JAPAN, vol. 11, no.
121 (P-568) 16 avril 1987; & JP-A-61 267 946**
• **IBM TECHNICAL DISCLOSURE BULLETIN, vol.
31, no. 3, août 1988, New York US; 'Three-beam
optical detection for magneto-optical storage
using holography', pages 12-13**
• **PATENT ABSTRACTS OF JAPAN, vol. 12, no.
303 (P-746) 18 août 1988; & JP-A-63 074 149**

## Description

L'invention concerne un dispositif de visualisation. Elle est applicable notamment à la séparation de polarisations, à la focalisation et à la séparation spectrale d'un faisceau lumineux ainsi qu'à l'agrandissement d'un faisceau par anamorphose.

Notamment, elle trouve une application particulière dans la visualisation par écran à cristal liquide monochrome et trichrome.

Pour générer des images vidéo de grande dimension on s'oriente actuellement vers l'utilisation de matrices actives à cristaux liquides dans des dispositifs de projection.

La projection d'images en couleurs est réalisable soit à partir de 3 valves monochromes, soit à partir d'une seule valve munie de filtres colorés.

Ces techniques de projection d'images, séduisantes pour leur compacité si on les compare aux tubes cathodiques, ont l'inconvénient de présenter un mauvais rendement lumineux de l'ordre de quelques pourcents. Les principales causes limitatives étant les suivantes :

- L'effet électro-optique dans le cristal liquide nécessite de travailler en lumière polarisée et conduit à une perte de 50 % de la lumière émise par la source à laquelle il faut ajouter l'absorption des polariseurs.
- La surface utile de chaque pixel est réduite du fait de la place occupée par le transistor et les électrodes de commande. Ce facteur constitue la limitation principale pour les dispositifs utilisant des cellules de petites dimensions et à haute résolution (pas des pixels < 100 µm) qui seront nécessaires aux besoins TVHD.
- Des solutions de projection utilisant une seule valve présentent l'avantage d'être mises en oeuvre dans des dispositifs particulièrement simples. Par contre, elles conduisent à une perte de luminosité d'un facteur au moins trois sur chacune des trois composantes chromatiques, imposée par la répartition spatiale des filtres colorés. L'absorption non négligeable de ces filtres étant incompatible avec l'utilisation de sources lumineuses intenses, les dispositifs de projection à une valve sont donc actuellement limités à la projection d'images couleurs de faibles dimensions.
- Le format 16/9 de la TVHD, très mal adapté au diagramme d'émission des sources lumineuses, conduit à rechercher des architectures incluant des fonctions d'anamorphose de faisceau.

Le document DE 38 29598 décrit un système d'éclairage utilisant séparément les deux polarisations d'une lumière non polarisée. Le document IBM Technical Disclosure Bulletin, Vol 31, n° 3 August 1988 concerne un système d'éclairage utilisant des dispositifs holographiques.

L'invention concerne un dispositif de visualisation pour la projection d'images comportant :

- un écran possédant une première partie et une deuxième partie juxtaposées ;
- un dispositif de séparation de polarisation arrangé pour recevoir un faisceau non polarisé et transmettant selon un premier trajet, la lumière polarisée selon une première direction de polarisation et réfléchissant selon un deuxième trajet la lumière polarisée selon une deuxième direction de polarisation orthogonale à la première direction ;
- un dispositif de focalisation dont une partie reçoit la lumière transmise par le dispositif de séparation de polarisation, la focalise vers la première partie de l'écran, et dont une autre partie reçoit la lumière réfléchie par le dispositif de séparation de polarisation, la focalise vers la deuxième partie de l'écran.

Les composants holographiques sont obtenus par interférence et permettent d'assurer des fonctions optiques complexes dans des films minces tel que cela est décrit dans le document : "L. Solymar, D.J. Cooke, Volume Holography and Volume Grating - Academic Press (1981)".

Les propriétés de ces composants holographiques en terme de sélectivité angulaire, spectrale ou de polarisation sont décrites par l'intermédiaire du formalisme d'ondes couplées dans le document : H. Kogelnik, Bell Syst. Tech. J. 48. p 2909 (1969).

Leur intérêt pour une utilisation avec une source blanche du type de celle utilisée dans les dispositifs de projection peut se résumer comme suit :

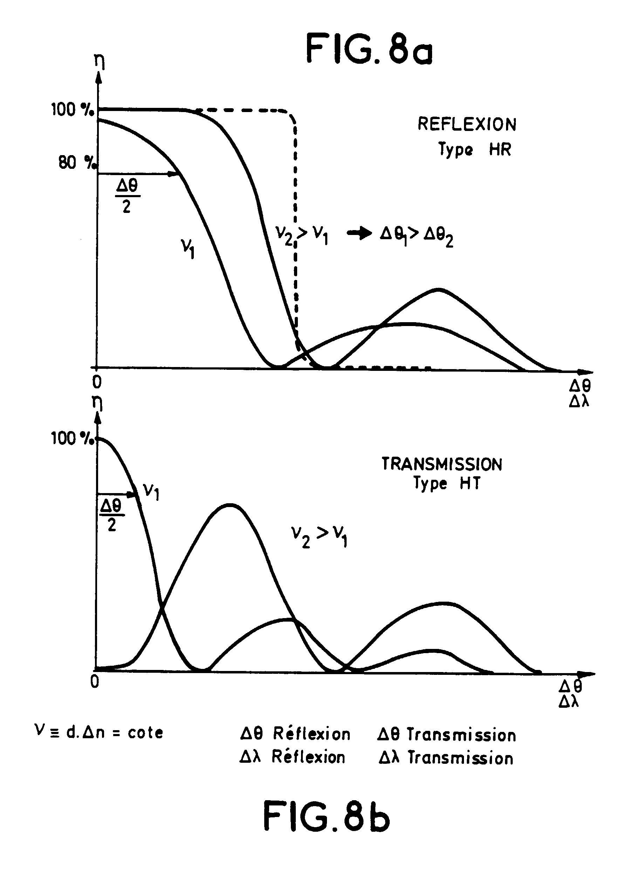

- Comme cela est illustré en figures 8a et 8b, des bandes passantes angulaire $\Delta\theta_o = 7,5°$ (dans l'air) et spectrale $\Delta\lambda = 40$ nm sont obtenues dans des structures, d'environ 10 µm d'épaisseur (d) et présentant une variation d'indice $\Delta n$ d'environ 0,03, fonctionnant en réflexion (type HR) ou fonctionnant en transmission (type HT). Elles sont par conséquent compatibles avec les sources trichromes du type lampe à arc ( $\Delta\lambda_i = 10$ nm ; le diamètre typique des sources de 3 mm collimatées à l'aide d'un condenseur de focale 30 mm et ouvert à f/1 correspond à une divergence angulaire $\Delta\theta_o = 6°$).
- Les fonctions holographiques polarisantes présentent les mêmes propriétés de bande passante angulaire et spectrale.

- Les fonctions holographiques "slantées" (réseau incliné d'un angle $\phi$ dans l'épaisseur) permettent de limiter la dispersion chromatique ( $\delta\theta_\lambda \sim 1$ mrd/nm).

Les différents objets et caractéristiques de l'invention apparaîtront plus clairement dans la description qui va suivre faite à titre d'exemple et dans les figures annexées qui représentent :

- la figure 1, un exemple de réalisation simplifié du dispositif de l'invention ;
- la figure 2, un exemple de réalisation de l'invention fonctionnant en monochrome ;
- la figure 3, un exemple de réalisation de l'invention fonctionnant en trichrome ;
- les figures 4a à 4c, les caractéristiques et points de fonctionnement d'un dispositif holographique de polarisation ;
- les figures 5a à 5c, des diagrammes de fonctionnement dans les couleurs bleue, verte, rouge ;
- la figure 6, une variante de réalisation des dispositifs des figures 2 et 3 améliorant le rendement de projection ;
- la figure 7, un autre exemple de réalisation détaillée du dispositif selon l'invention ;
- les figures 8a et 8b, des diagrammes de fonctionnement de composants soit en réflexion, soit en transmission ;
- les figures 9 et 10, une variante de réalisation du système de l'invention ;
- les figures 11, 12 et 13 des variantes de réalisation du dispositif de la figure 6.

Il existe des matériaux photopolymères, tels que ceux connus sous les marques commerciales Du Pont de Nemours ou les photopolymères Polaroïd (DMP-128) qui présentent une résolution suffisante pour enregistrer des structures en réflexion ( $\Lambda < 1$ $\mu$m) avec des variations d'indice photoinduites pouvant atteindre $10^{-1}$ qui permettent la superposition dans un même film de plusieurs fonctions holographiques. Nous avons montré précédemment qu'une variation d'indice de $3.10^{-2}$ par composante spectrale est suffisante pour assurer une bande passante angulaire et spectrale adaptée à l'une des trois composantes de la source et sans affecter les deux autres.

L'intérêt des matériaux photopolymères par rapport aux matériaux classiques types gélatine bichromatée, hormis la simplicité du process, réside dans la possibilité de le sensibiliser indifféremment dans tout le domaine visible. Par conséquent, les fonctions holographiques, dans ces matériaux pourront être enregistrées, à l'aide d'un laser accordable par exemple, pour chacune des trois longueurs d'onde respectives de fonctionnement. L'absence de changement de longueur d'onde entre l'enregistrement et la lecture, limite considérablement les aberrations des composants holographiques.

De tels dispositifs holographiques peuvent donc être utilisés pour réaliser des dispositifs d'éclairage à lumière polarisée, focalisant plusieurs composantes de couleurs en un ou plusieurs points.

De tels dispositifs d'éclairage vont être décrits dans ce qui suit en application à la visualisation d'écrans à cristaux liquides.

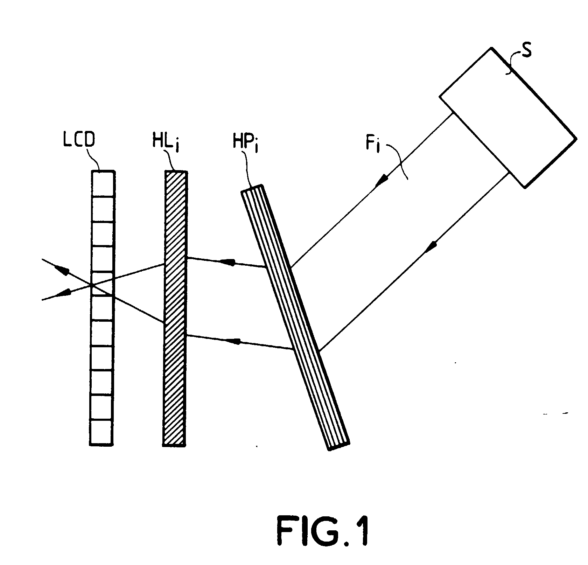

La figure 1 représente un exemple de réalisation simplifié d'un dispositif de visualisations selon l'invention. Ce dispositif comporte :

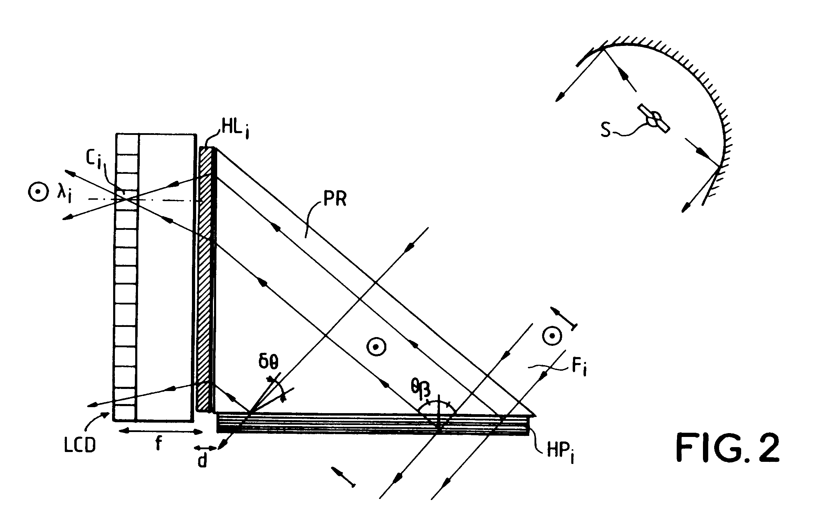

- une source lumineuse S émettant un faisceau lumineux $F_i$ qui peut être tout simplement une source de lumière blanche et non polarisée et collimatée,
- un dispositif holographique de polarisation $HP_i$ recevant le faisceau lumineux $F_i$ et enregistré de telle façon que, sous l'angle d'incidence du faisceau $F_i$, il retransmet (réfléchi sur la figure 2) un faisceau de lumière polarisée selon une direction déterminée,
- un dispositif holographique de focalisation $HL_i$ recevant le faisceau de lumière polarisée transmis par le dispositif $HP_i$ et enregistré de telle façon qu'il transmette au moins un faisceau convergent;
- un écran matriciel à cristal liquide LCD recevant le faisceau convergent et placé sensiblement au point de focalisation de ce faisceau.

L'écran à cristal liquide LCD possède normalement plusieurs éléments images (pixels). Le dispositif holographique de focalisation est enregistré de façon à transmettre, en échange du faisceau polarisé qu'il reçoit, autant de faisceaux qu'il y a d'éléments images, chacun de ces faisceaux étant sensiblement focalisé au centre d'un élément image.

Le faisceau lumineux $F_i$ de la source doit faire un angle d'incidence approprié avec le plan d'incidence du dispositif holographique de polarisation $HP_i$. De même, le faisceau polarisé transmis par le dispositif $HP_i$ doit faire un angle approprié avec le dispositif holographique de focalisation $HL_i$.

Sur le dispositif de la figure 1, le dispositif holographique de focalisation $HL_i$ a été placé parallèlement à l'écran à cristal liquide LCD de telle façon que les différents faisceaux transmis par $HL_i$ focalisent dans une cellule de l'écran LCD.

La position du dispositif holographique de polarisation $HP_i$ par rapport à la direction du faisceau $F_i$ émis par la source et par rapport au dispositif holographique de focalisation $HL_i$, est déterminée par les conditions d'enregistrement de l'hologramme. De même, sur la figure 1, le dispositif holographique $HP_i$ fonctionne en transmission mais il pourrait fonctionner en réflexion. De même, le dispositif holographique $HL_i$ qui fonctionne en transmission pourrait fonctionner en réflexion.

La section du faisceau $F_i$ peut être de forme différente de celle de l'écran LCD. Notamment, la section du faisceau $F_i$ peut être circulaire ou carrée tandis que l'écran LCD peut être rectangulaire (format 16 x 9). Pour avoir un éclairage uniforme de l'écran, il faut réaliser une anamorphose du faisceau. Cette anamorphose est faite soit par le dispositif $HP_i$ soit par le dispositif $HL_i$, compte-tenu que ces dispositifs peuvent aisément travailler hors d'axe, c'est-à-dire en-dehors des lois de la réflexion (lois de DESCARTES).

La figure 2 représente un exemple de réalisation particulier du dispositif de l'invention.

Ce dispositif associe, sur un prisme PR d'angle voisin de 45°, le dispositif holographique $HP_i$ et le dispositif holographique de focalisation $HL_i$.

L'écran LCD est placé pratiquement sur la matrice $HL_i$ pour limiter l'étendue géométrique de l'image de la source S à une dimension proche de la surface utile du pixel, compte tenu des divergences angulaires déjà citées ($\Delta \theta = \pm 2°$) (dans le milieu d'indice n).

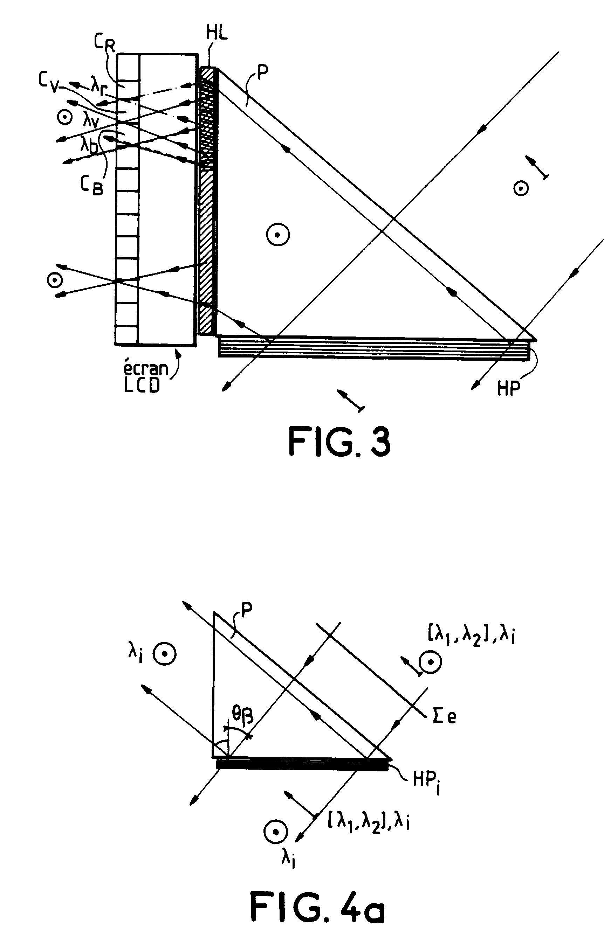

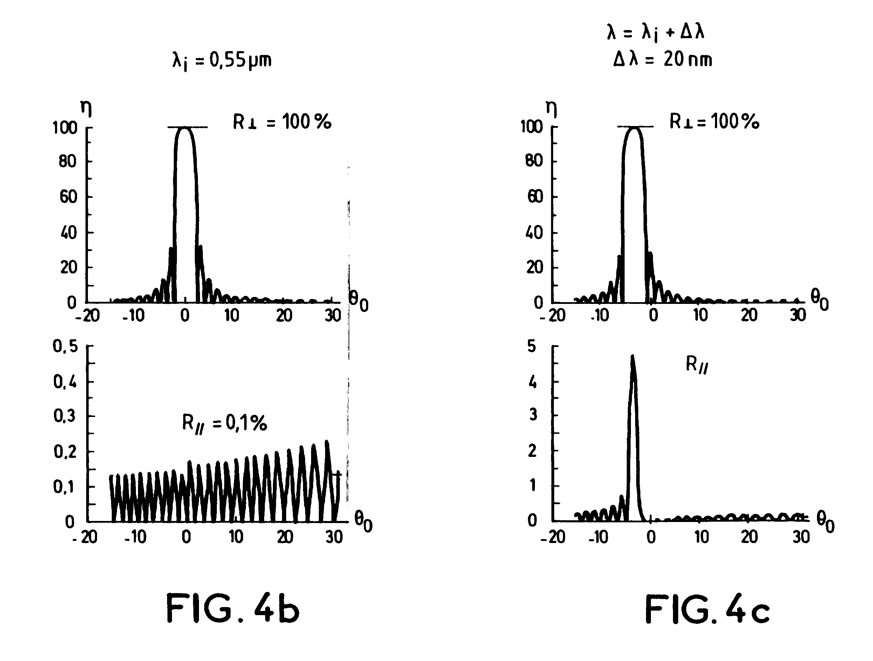

Le polariseur $HP_i$ est un composant holographique du type de celui décrit sur les figures 4a à 4c. Il peut être enregistré sur un film de matériau photosensible directement déposé sur l'une des faces du cube. Son fonctionnement dans le dispositif décrit précédemment permet de réfléchir la lumière polarisée perpendiculairement au plan d'incidence (notation $\odot$) centrée autour de la composante chromatique de la source à la longueur d'onde $\lambda_1$ pour laquelle le composant a été enregistré et au voisinage de l'angle d'enregistrement. Il fonctionne également pour un autre couple longueur d'onde $\lambda_1$ - angle d'incidence $\theta_i$ pour lequel la relation de Bragg reste satisfaite compte-tenu des conditions d'enregistrement.

On a typiquement une bande passante angulaire $\Delta \theta = 5°$ et spectrale $\Delta \lambda = 20$ nm pour lesquelles l'efficacité de diffraction est supérieure à 50% dans les conditions suivantes :

| | |
|---|---|
| $\Delta n = 0,035$ | variation d'indice photoinduite |
| $d = 12 \mu m$ | épaisseur d'un matériau |
| $\Lambda \sim 0,26 \mu m$ | pas des franges |
| $\theta_B = 45°$ à $\lambda = 0,55 \mu m$ | angle moyen de fonctionnement. |

Le composant $HL_i$ est destiné à focaliser la composante chromatique $\lambda_i$ dans un élément image Ci de l'écran LCD dont la commande électrique est associée à $\lambda_i$. Le composant $HL_i$ est donc équivalent à une matrice de microlentilles imbriquées, dont le taux de remplissage de 100 % est autorisé par le principe de superposition des hologrammes mais impossible à réaliser par des moyens d'optique classique. Chacune de ces lentilles fonctionne hors d'axe ce qui a les deux avantages suivants :

- conservation de l'anamorphose du faisceau cylindrique d'éclairage en un format proche de 16/9 qui est obtenu par la réflexion à 45° dans le prisme sur le dispositif de focalisation $HP_i$,
- limitation de la dispersion chromatique du dispositif $HL_i$ puisque le réseau type HT est constitué de strates inclinées par rapport à la surface du support du dispositif.

Il convient de préciser ici, en ce qui concerne l'anamorphose, que le faisceau incident $F_i$ peut faire un angle d'incidence sur le plan du dispositif $HP_i$ différent de 45°. Le réseau holographique étant enregistré de façon à satisfaire les conditions de réflexion, on obtient une anamorphose du faisceau lors de la réflexion.

On donne ici un exemple de réalisation de matrice de microlentilles holographiques compatibles avec des éléments images de l'écran LCD au pas de 100 $\mu m$. Cette matrice sera enregistrée dans une couche photosensible à l'aide d'un masque $M_i$ et restituée en plaçant l'écran LCD à la place du masque $M_i$. Le masque $M_i$ peut d'ailleurs être l'écran LCD lui-même ou un équivalent (éventuellement un masque holographique). La focale de ces microlentilles étant donc imposée par l'épaisseur de la contre-électrode de l'écran LCD et de son support typiquement f = 1 mm.

Les caractéristiques d'une microlentille élémentaire de la matrice $HL_i$ peuvent être :

| | |
|---|---|
| $f = 1$ mm | focale d'une microlentille |
| $\phi_L = 0,3$ mm | diamètre d'une microlentille |
| $\theta_B = 45°$ | angle de lecture de $HL_i$ (dans le prisme d'indice n = 1,52) |

| | |
|---|---|
| $\Lambda$ moyen = 0,45 $\mu m$ | pas moyen des strates de $HL_i$ |
| $\Delta n = 0,03$ | variation d'indice photoinduite |

(suite)

| d = 7 μm | épaisseur de HL$_i$. |
|---|---|

Cette lentille travaille pour l'infini et son foyer et la dimension Δx de la tache au foyer peut être calculée approximativement à l'aide de la tache de diffraction Δ x (diff) et de la divergence de l'onde de lecture λ , conduisant à un élargissement Δx (div) :

$$\Delta x = \Delta x(diff) + \Delta x(div)$$

Dans l'exemple pris si on considère toujours Δθ= ± 2°on a :

$$\Delta x \ (diff) = 4{,}5 \ \mu m$$

$$\Delta x(div) \sim 2 \ f \ \Delta\theta = 72 \ \mu m$$

$$\Delta x \sim 76 \ \mu m$$

Dans ces types d'architectures le rendement lumineux de l'image projetée ne sera pas affecté par la surface utile de chaque pixel tant que son coefficient de transmission est supérieur à 45 % pour l'exemple donné.

Pour réaliser l'enregistrement de la matrice de microlentilles dans le dispositif holographique de focalisation HL$_i$ on utilise un masque par exemple.

Ce masque est un masque du même type que celui utilisé pour réaliser la matrice d'électrodes de l'écran LCD. Seule la dimension $\phi_M$ du pixel transparent du masque doit être adaptée à la divergence de la microlentille qui doit être enregistrée. Dans l'exemple on aura donc :

$$\phi_M \sim 2 \ \lambda \ f/ \ \phi_{\ L} = 4{,}5 \ \mu m$$

L'emplacement de l'élément image transparent du masque correspondant à l'élément image de l'écran (LCD) est adressé par la commande de l'écran.

Le masque peut également être un écran à cristal liquide éclairé à la longueur $\lambda_{\ i}$ de la source et adressé électriquement pour enregistrer la matrice HL$_i$.

Comme on l'a déjà noté, l'exemple de réalisation de l'invention prévoit un dispositif de focalisation (HL) réalisé sous forme d'une matrice de microlentilles. On prévoit également de ne pas avoir de dispositif de focalisation dans le dispositif de l'invention.

Le dispositif de la figure 2 fonctionne de la manière suivante :

La source S éclaire uniformément un dispositif holographique de polarisation HP$_i$. Le faisceau F$_i$ entre dans le prisme PR perpendiculairement à la face d'entrée. Une composante de polarisation est retransmise sans être pratiquement déviée tandis que l'autre composante est réfléchie. Le faisceau réfléchi est transmis au dispositif holographique de focalisation HL$_i$ qui le focalise dans les différents éléments images de l'écran LCD. Par ailleurs, l'écran LCD est commandé par des moyens non représentés pour visualiser une image.

Dans ce qui précède on a considéré un fonctionnement à une seule longueur d'onde $\lambda_{\ i}$ (fonctionnement monochrome) et le dispositif HL$_i$ a été enregistré pour focaliser une longueur d'onde $\lambda_{\ i}$.

Le dispositif peut également fonctionner avec plusieurs longueurs d'ondes notamment avec trois longueurs d'ondes (fonctionnement trichrome) correspondant aux longueurs d'ondes du bleu (0,46 μm), du vert (0,55 μm), du rouge (0,68 μm) par exemple.

La figure 3 illustre un tel système trichrome. Dans ce système, l'écran LCD possède, pour chaque élément image, une cellule image C$_B$ destinée à moduler une longueur d'onde correspondant au bleu, une cellule image C$_V$ destinée à moduler une longueur d'onde correspondant au vert et une cellule image C$_R$ destinée à moduler une longueur d'onde correspondant au rouge. Sur la figure 3, ces cellules ont été représentées de façon agrandie mais trois cellules ainsi réunies peuvent ne correspondre en dimensions qu'à un seul élément image de la figure 2.

Le dispositif holographique de focalisation HL a été enregistré pour focaliser la composante de longueur d'onde correspondant au bleu, contenue dans le faisceau retransmis par le dispositif HP dans les cellules modulant le bleu de l'écran LCD. De même il doit focaliser la composante verte dans les cellules modulant le vert, et la composante rouge dans les cellules modulant le rouge.

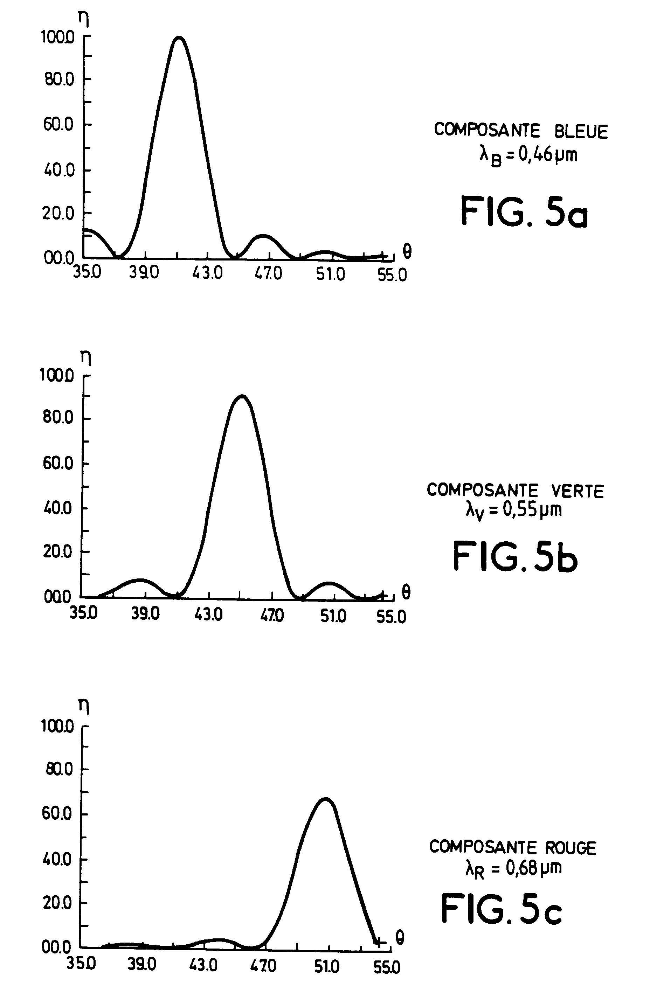

Les bandes passantes angulaires et spectrales pour les trois composantes chromatiques de la source S sont données sur les figures 5a à 5c.

Pour enregistrer un tel hologramme dans HL on utilise un masque réalisé de la même façon que l'écran à cristal liquide LCD. Ce masque sera par exemple un écran à cristal liquide. L'emplacement d'un élément image du masque correspondant à une couleur et correspondant à un élément image de l'écran LCD est adressé par la commande de la composante chromatique de la couleur considérée de l'écran à cristal liquide de masquage.

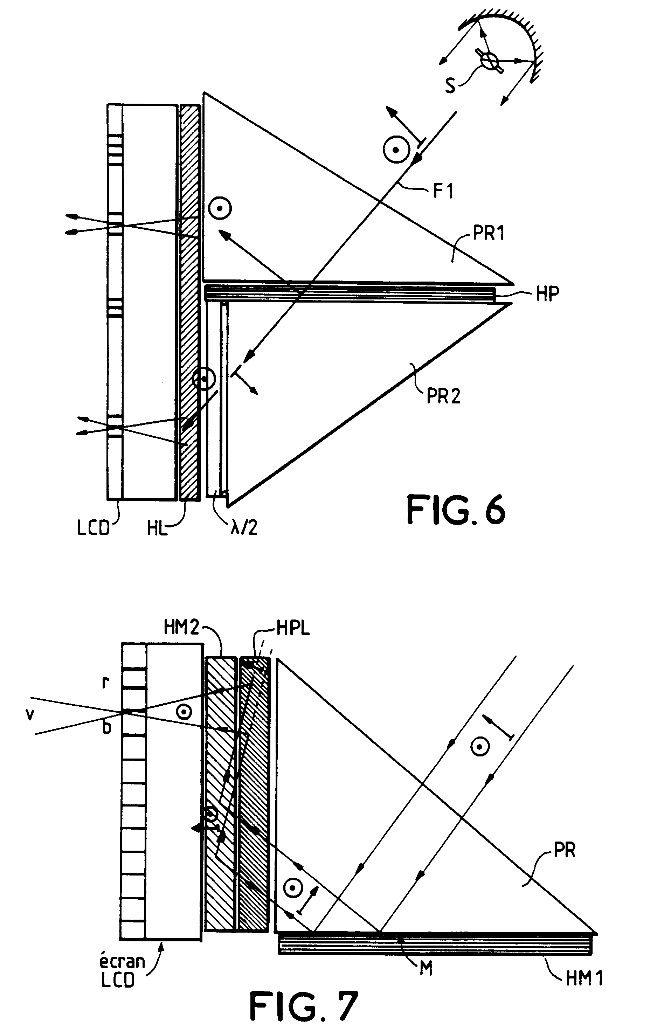

Le dispositif de la figure 6 est une variante des dispositifs précédents dans laquelle la lumière réfléchie par le dispositif de polarisation HP éclaire une partie (la moitié par exemple) du dispositif de focalisation HL et de l'écran LCD.

La lumière qui n'est pas réfléchie (polarisation parallèle au plan d'incidence) et qui est transmise par le dispositif de polarisation HP éclaire l'autre partie du dispositif de focalisation et l'autre partie de l'écran. Toute la lumière de la source peut être donc utilisée.

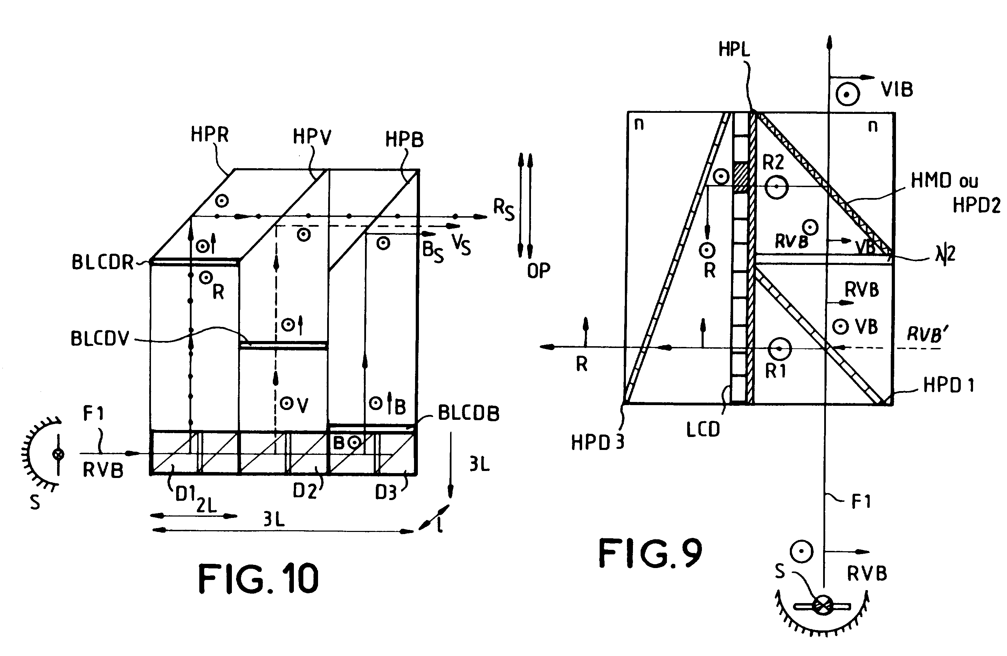

Il est possible de prévoir une lame demi-onde $\lambda/2$ qui fait tourner la polarisation de la lumière éclairant l'une des parties de l'écran. Sur la figure 6, cette lame demi-onde est placée sur le trajet du faisceau transmis par le dispositif HP. L'écran LCD est alors commandé électriquement de façon uniforme sur toute sa surface. Avantageusement, la lame demi-onde peut être une cellule à cristal liquide passive fonctionnant dans le mode guide d'onde (chromatique). Cette lame demi-onde pourrait être placée sur le trajet du faisceau réfléchi au lieu du faisceau transmis par le dispositif HP. Egalement, de préférence, cette lame demi-onde pourrait être placée de façon à être perpendiculaire au faisceau, par exemple comme dans le cas de la figure 9 qui sera décrite ultérieurement.

On peut également ne pas prévoir la lame demi-onde. Dans ce cas, les deux parties de l'écran sont donc éclairées par des faisceaux de lumière de polarisations orthogonales. On peut alors commander les deux parties de l'écran de façon inversée.

La figure 7 représente un exemple de réalisation du dispositif de l'invention dans lequel la matrice HPL est un hologramme fonctionnant en réflexion (type HR) et présentant simultanément des propriétés de polarisation.

L'écran LCD étant toujours placé contre le composant HPL on introduit dans le dispositif des fonctions HM2 type miroir holographique. Le dispositif de la figure 7 utilise un prisme PR fonctionnant en réflexion totale sur l'une de ses faces. L'autre face comportant successivement, de droite à gauche, une matrice holographique de microlentilles polarisantes HPL, un miroir holographique HM2 et l'écran LCD. Il est à noter que le dispositif HPL pourrait être également un dispositif holographique polarisant sans enregistrement de microlentilles.

Le principe de fonctionnement de ce dispositif est basé sur l'exploitation des propriétés de sélectivité spectrale étroite des structures holographiques en réflexion. Il est décrit comme suit :

Le faisceau d'éclairage collimaté est réfléchi totalement par la face M du prisme PR qui réalise si on le désire une anamorphose au format 16/9 par exemple. Cette réflexion peut se faire par un hologramme HM1. Le faisceau traverse une première fois HPL sans être diffracté à une incidence telle que l'on soit sous incidence de Bragg pour HM2 et hors Bragg pour HPL. Il est alors totalement réfléchi par HM2, HM2 ayant été enregistré pour réfléchir ce faisceau à l'incidence de Bragg pour HPL. La partie de l'onde polarisée perpendiculairement au plan d'incidence est alors diffractée efficacement par HPL pour être focalisée dans les pixels de l'écran LCD. Le composant HM2 est alors traversé une seconde fois sans diffraction puisqu'il est cette fois ci à une incidence hors Bragg.

On notera que la face M du prisme PR n'est pas nécessairement réalisée avec un composant holographique, il peut s'agir d'une réflexion soit métallique ou diélectrique, soit totale à l'interface du dioptre air-verre.

On a présenté ici une structure dans laquelle la fonction polarisante est réalisée sur la fonction lentille. On notera qu'elle peut être de manière indifférente réalisée dans HM2 ou encore une fois sur M comme dans le dispositif des figures 2 et 3, si ce composant est holographique.

A titre d'exemple de réalisation du dispositif de la figure 7, on présente ici un exemple non restrictif d'association de deux composants HPL et HM2 visant à démontrer la compatibilité des bandes spectrales et angulaires de ces composants. Les propriétés de sélectivité angulaire et spectrale des dispositifs holographiques associées à une source blanche de petite dimension, permettent de s'affranchir des dispersions chromatiques des composants holographiques.

Dans ce type de réalisation monobloc, les propriétés holographiques (sélectivités angulaire et spectrale) permettent d'éviter l'utilisation de miroirs dichroïques.

Matrice de microlentilles polarisantes HPL

$f = 1$ mm $\theta_L = 0{,}3$ mm (focale et ouverture d'une $\mu$lentille) $\overline{\theta}_B = 63°$ $\overline{\theta}_d = 0$ à $\lambda = 0{,}55$ $\mu$m (respectivement angle de lecture et de diffraction moyen)
$\phi = 37{,}5°$ $\qquad \Delta_n = 0{,}025 \qquad d = 12$ $\mu$m
$\Lambda_{moyen} = 0{,}24$ $\mu$m

Miroir holographique HM2

$\theta_B = -27°$ $\theta_d = 63°$ à $\lambda = 0,55\ \mu m$ (angle de lecture et de diffraction respectivement)
$\phi = 162°$ $\Delta_n = 0,05$ $d = 13\ \mu m$
$\Lambda = 0,26\ \mu m$

La figure 9 représente une variante de réalisation du dispositif de l'invention. Ce dispositif comporte un premier dispositif de séparation de polarisations HPD1 disposé incliné (à 45° par exemple) par rapport à l'écran LCD et permettant d'éclairer la moitié de l'écran LCD. Il reçoit un faisceau incident RVB selon une direction parallèle à l'écran LCD. Il réfléchit vers l'écran LCD l'une des polarisations R1 du faisceau incident à une longueur d'onde déterminée (longueur d'onde correspondant au rouge par exemple). Il retransmet sans déflexion l'autre polarisation R2 du faisceau de la même longueur d'onde (rouge) ainsi que la lumière à toutes les autres longueurs d'ondes (notamment celles correspondant au vert et au bleu).

Un deuxième dispositif de séparation de polarisations HPD2 fonctionnant à la même longueur d'onde que HPD1 (le rouge selon l'exemple pris) réfléchi le faisceau R2 vers l'écran LCD. Ce dispositif de séparation peut également être un miroir holographique fonctionnant à la longueur d'onde à réfléchir (le rouge) :

L'écran LCD reçoit les faisceaux R1 et R2 par l'intermédiaire d'un dispositif de focalisation HL qui focalise comme cela a été décrit précédemment la lumière sur les différents éléments images de l'écran LCD. Cependant, il est également possible de ne pas prévoir de dispositif de focalisation HL. En sortie de l'écran LCD un troisième dispositif de séparation de polarisations HPD3 laisse passer la lumière d'une certaine polarisation et réfléchi (non transmission) la lumière de polarisation perpendiculaire et cela en fonction de l'image affichée par l'écran LCD.

De plus, les deux parties de l'écran recevant les deux faisceaux R1 et R2 peuvent être commandés en inverse. Ou bien, il est possible de prévoir une lame $\lambda/2$ qui fait tourner de 90° la polarisation de l'un de ces faisceaux. Par exemple, comme cela est représenté sur la figure 9, la lame $\lambda/2$ est placée entre le premier dispositif de séparations de polarisation HPD1 et le deuxième dispositif de séparations de polarisation HPD2.

Le dispositif de la figure 9 fonctionne à une seule longueur d'onde ou plus précisément à une gamme de longueurs d'ondes relativement étroite. La lumière à d'autres longueurs d'ondes n'est pas déviée et ressort selon le faisceau VB.

Pour traiter d'autres longueurs d'ondes l'invention prévoit de disposer d'autres dispositifs tels que celui de la figure 9 selon une disposition représentée en figure 10. Sur cette figure 10 on a aligné deux autres dispositifs sur la direction du faisceau VB. Le premier dispositif est conçu pour traiter une gamme de longueurs d'ondes correspondant par exemple au vert. Il ne dévie pas la lumière possédant une longueur d'onde appartenant à une troisième gamme, le bleu par exemple.

Les trois dispositifs D1, D2, D3 traitent ainsi trois gammes de longueurs d'ondes différentes c'est-à-dire des gammes correspondants respectivement au rouge, au vert et au bleu.

Les trois faisceaux issus des trois dispositifs D1, D2, D3 sont superposés à l'aide de trois miroirs HPR, HPV, HPB recevant en parallèle les trois faisceaux traités et disposés en série sur la direction des faisceaux réfléchis de façon à rendre colinéaires les trois faisceaux réfléchis $R_s$, $V_s$, $B_s$. Ces trois faisceaux sont transmis à une optique de sortie OP.

Sur la figure 9, le faisceau incident F1 est parallèle au plan de l'écran LCD et cela est utile si l'on veut disposer, comme on va le voir, en série plusieurs blocs de constructions identiques tel que celui de la figure 9. Cependant le faisceau incident RVB peut être perpendiculaire au plan de l'écran LCD.

De plus, sur la figure 10, on dispose les différents éléments du système de façon que les trajets optiques des différents faisceaux soient égaux. Notamment, les écrans à cristaux liquides LCDR, LCDV, LCDB, correspondant aux trois gammes de longueurs d'ondes traitées sont disposés à des distances différentes des dispositifs D1, D2, D3.

Par exemple, si on suppose que la dimension de chaque dispositif D1, D2, D3 selon la direction du faisceau RVB est égale à L, l'écran LCDR est placé à une distance 2L du dispositif D1. L'écran LCDV est placé à une distance L du dispositif D2 et l'écran LCDB est pratiquement accolé au dispositif D3.

Le système de la figure 10 permet ainsi de conserver l'équidistance entre la source S et les écrans à cristaux liquides LCDR, LCDV et LCDB d'une part, et les écrans à cristaux liquides et l'optique de projection d'autre part.

L'encombrement du système de la figure 10 est environ 3L x 3L x 1, L étant la dimension d'un dispositif tel que D1 selon la direction du faisceau BVR et 1, la dimension D1 perpendiculairement au plan de la figure 10.

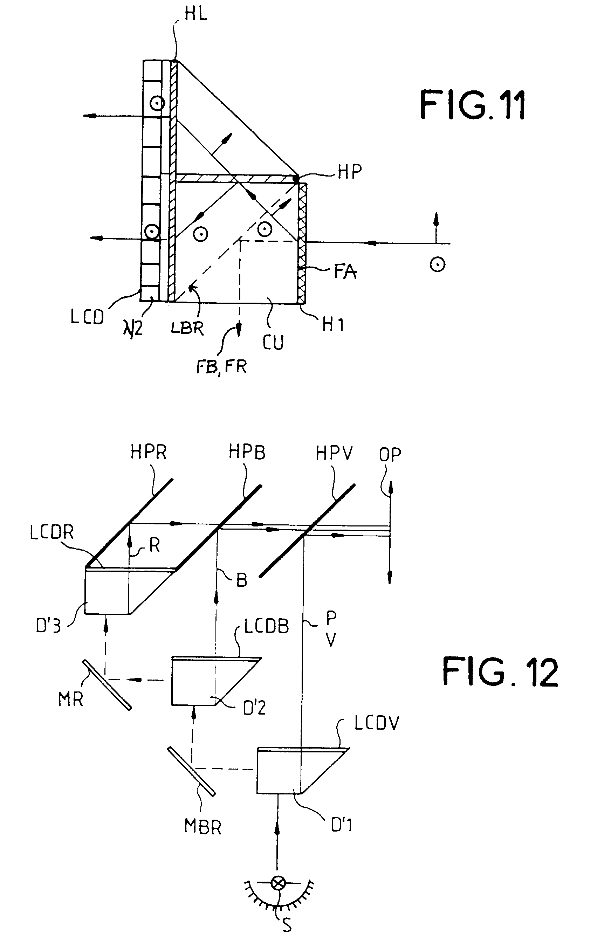

La figure 11 représente une variante de réalisation du système de la figure 6 permettant d'obtenir des trajets égaux en tous points à partir de la source S jusqu'à un écran LCD. Ce dispositif comporte, bien que cela ne soit pas obligatoire, le dispositif holographique de focalisation HL accolé à l'écran LCD. Le dispositif holographique de polarisation HP est situé selon un plan médian à l'écran LCD et au dispositif HL. Le faisceau d'entrée est tel que son angle d'incidence sur le dispositif HP est de 45°. Pour obtenir cet angle d'incidence, un cube CU est accolé au dispositif HP par une face et reçoit par une face voisine FA le faisceau d'entrée. A cette face FA est associé un dispositif holographique H1 enregistré pour dévier le faisceau d'entrée de façon à le retransmettre sous une incidence sensiblement de 45° au dispositif HP. De préférence, le faisceau d'entrée est perpendiculaire à la face FA et au dispositif H1.

En fonctionnement à plusieurs longueurs d'ondes (fonctionnement trichrome), le dispositif holographique H1 défléchi le faisceau d'entrée ayant une longueur d'onde située dans une bande étroite, le vert par exemple. Les faisceaux possédant d'autres longueurs d'ondes ne sont pas déviés (faisceaux FB et FR). Par contre, le cube CU possède une lame dichroïque LBR réfléchissant ces faisceaux FB et FR vers d'autres dispositifs de visualisation D'2 et D'3.

Dans l'exemple de réalisation de la figure 11, la lame dichroïque LBR est en aval du dispositif H1 (dans le cube CU), mais elle pourrait également être en amont du dispositif H1.

La figure 12 représente un exemple d'agencement de ces dispositifs. Dans cet agencement, les écrans à cristaux liquides LCDV, LCDB et LCDR sont disposés de façon à être équidistants de l'optique de projection OP.

Le dispositif D'2 fonctionne à une bande de longueurs d'ondes correspondant au bleu. Il est couplé au dispositif D'1 par un miroir MBR qui peut être un miroir holographique réfléchissant le bleu et le rouge.

Le dispositif D'3 fonctionne à une bande de longueurs d'ondes correspondant au rouge. Il est couplé au dispositif D'2 par un miroir MR.

Les faisceaux traités par les écrans LCDV, LCDB et LCDR sont rendus colinéaires comme dans le système de la figure 10.

Il est à noter que si les écrans LCDV, LCDB et LCDR sont équidistants de l'optique de sortie OP, ils ne sont pas équidistants de la source S dans cet exemple de réalisation. Cela peut donc induire des différences de luminosité pour les différentes couleurs en raison de la divergence des faisceaux. On peut remédier à cela en prévoyant dans les dispositifs holographiques des fonctions de divergence et/ou de convergence.

On peut également prévoir de telles fonctions de divergence et/ou de convergence dans chacun des dispositifs holographiques des différents exemples de réalisation précédents.

Par exemple, en figure 9, les différents points de l'écran LCD ne sont pas équidistants de la source S. Si le faisceau d'éclairage est divergent, l'éclairage de l'écran n'est pas uniforme. Pour y remédier, on prévoit d'inclure une fonction de convergence dans le dispositif HMD par exemple.

Selon une variante de l'invention, il est possible d'introduire une fonction de convergence ou de divergence dans les dispositifs de séparation de polarisations tels que les dispositifs HPD1 ou HMD (ou HPD2) de la figure 9. Cette fonction de convergence ou de divergence a pour but de compenser les éventuelles inhomogénéités d'éclairements dues notamment au fait que l'écran LCD est éclairé en deux parties et que les faisceaux d'éclairement de ces deux parties parcourent des trajets différents.

Selon une autre variante de réalisation le faisceau d'éclairement de l'écran LCD fait un angle avec la normale au plan de l'écran, cet angle pouvant par exemple atteindre 10°. Dans ces conditions, sur les différentes figures annexées, on doit considérer que les différents faisceaux et les différents dispositifs font un angle par rapport aux positions représentées. Cela permet d'optimiser le contraste de l'écran LCD. Par exemple dans la description de la figure 9, le faisceau F1 peut alors n'être pas parallèle au plan de l'écran mais faire un angle.

Selon une autre variante de l'invention, tous les éléments du dispositif de l'invention ne sont pas réalisés selon les techniques holographiques. Par exemple, les séparateurs dichroïques ainsi que les polariseurs peuvent être réalisés selon les techniques d'optiques classiques tout en fournissant une compatibilité avec des éléments réalisés en holographie.

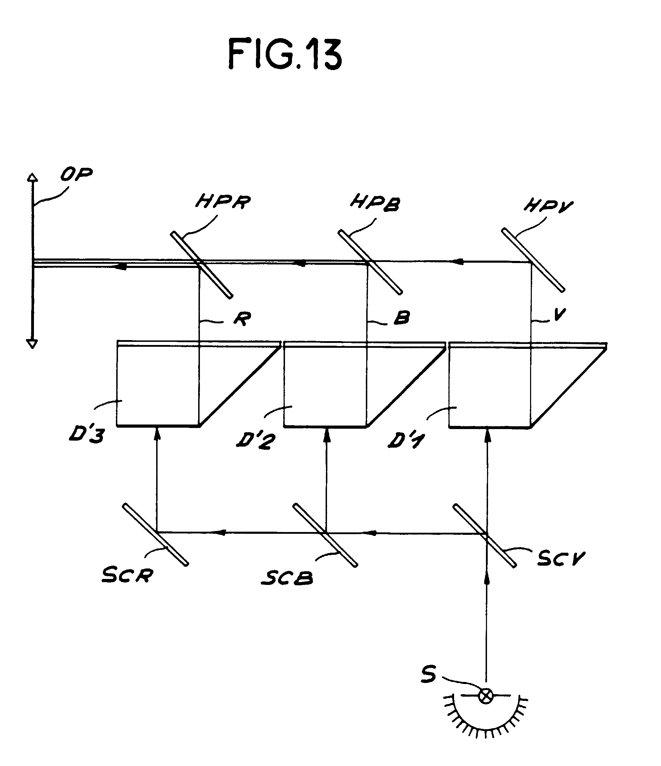

La figure 13 représente une variante de réalisation de la figure 12 dans laquelle la séparation chromatique n'est pas prévue dans les dispositifs D'1, D'2, D'3 mais entre ces dispositifs et la source.

Comme on peut le voir on prévoit un séparateur chromatique SCV qui filtre les longueurs d'onde correspondant au vert pour les transmettre au dispositif D'1. Les autres longueurs d'onde sont réfléchies vers un autre séparateur chromatique SCB qui réfléchit les longueurs d'onde correspondant au bleu vers le dispositif D'2 et qui transmet les autres longueurs d'ondes correspondant au rouge au dispositif D'3 par l'intermédiaire d'un miroir SCR.

Les dispositifs D'1, D'2, D'3 sont constitués de la même façon mais ne comportent pas, à la différence de ceux des figures 11 et 12, des lames de séparation chromatique (lame dichroïque LBR) dans le cube CU. Le dispositif H1 n'a pas besoin d'être sélectif en longueurs d'onde pour dévier le faisceau qu'il reçoit puisque la sélection en longueurs d'ondes a déjà été faite.

Les dispositifs D'1, D'2, D'3 peuvent être placés côte à côte. En sortie, les miroirs HPV, HPB et HPR sont orientés de façon que les trois trajets des trois gammes de longueurs d'ondes traitées soient quasiment égaux.

Le dispositif de projection selon l'invention permet :

-   Un gain notable du rendement lumineux du projecteur par rapport aux structures classiques provenant :

    .   pour un facteur 3, de l'absence de filtres colorés, les fonctions dichroïques étant réalisées par des composants holographiques .

    .   pour un facteur pouvant atteindre 2,2, de la focalisation dans les pixels permettant de s'affranchir du taux de transmission de l'écran LCD (dans le cas des pixels au pas de 100 µm).

.  pour un facteur 1,3 du taux de remplissage de 100 % obtenu avec des matrices de lentilles holographiques.

.  on s'attend également à un gain notable sur l'efficacité du polarisateur holographique comparé au cube polarisant dichroïque diélectrique large bande spectrale.

-  La réalisation de structures optiques à faible coût et copiables optiquement à partir d'un dispositif maître.

Les dispositifs de visualisation selon l'invention sont donc basés sur l'utilisation de matrices à cristaux liquides LCD dans un système de projection utilisant des composants holographiques de volume. Elles permettent simultanément :

-  d'accroître le rendement lumineux de projection en exploitant les propriétés des hologrammes de volume qui permettent l'obtention d'efficacités de diffraction élevées pouvant atteindre la limite théorique de 100 % et des taux de polarisation atteignant 1/1000 sur les faisceaux réfléchis et transmis.

-  d'intégrer dans des films minces d'épaisseur inférieure à 100 µm une fonction optique complexe réalisant à la fois la polarisation HP de la source d'éclairage, la focalisation sélective $HL_i$, dans chacun des pixels de la matrice, et la séparation chromatique de chacune des trois composantes chromatiques $\lambda_i$ rouge-vert-bleue de la source.

-  la compatibilité avec des impératifs de production industrielle en utilisant les procédés de duplication des hologrammes.

Il est bien évident que la description qui précède n'a été faite qu'à titre d'exemple et que d'autres variantes peuvent être envisagées sans sortir du cadre de l'invention. Notamment, les dispositions des dispositifs holographiques et leurs inclinaisons par rapport aux faisceaux lumineux à traiter ainsi que la nature de ces dispositifs holographiques n'ont été indiquées que pour illustrer la description. Egalement, l'invention a été décrite, dans ses exemples de réalisations détaillées représentés par les figures, en application à un système de visualisation d'un écran à cristal liquide. Cependant, on rappelle qu'elle concerne avant tout un dispositif de visualisation qui est utilisé dans les exemples représentés pour l'éclairage de l'écran à cristal liquide, mais il pourrait ne pas y avoir d'écran à cristal liquide où il pourrait y avoir tout autre écran. La réalisation des dispositifs holographiques est connue dans la technique. On sait, par exemple, enregistrer de façon permanente des hologrammes fonctionnant sous faisceau de lecture d'intensité importante.

**Revendications**

1.  Dispositif de visualisation pour la projection d'images comportant :

    -  un écran possédant une première partie et une deuxième partie juxtaposées ;
    -  un dispositif de séparation de polarisation (HP) arrangé pour recevoir un faisceau non polarisé et transmettant selon un premier trajet, la lumière polarisée selon une première direction de polarisation et réfléchissant selon un deuxième trajet la lumière polarisée selon une deuxième direction de polarisation orthogonale à la première direction ;
    -  un dispositif de focalisation (HL, HPL) dont une partie reçoit la lumière transmise par le dispositif de séparation de polarisation, la focalise vers la première partie de l'écran, et dont une autre partie reçoit la lumière réfléchie par le dispositif de séparation de polarisation, la focalise vers la deuxième partie de l'écran.

2.  Dispositif selon la revendication 1, caractérisé en ce que le dispositif de focalisation oriente les directions de propagation de la lumière transmise vers la première partie de l'écran et celle transmise vers la deuxième partie de l'écran de telle façon que ces directions soient sensiblement parallèles.

3.  Dispositif selon la revendication 1, caractérisé en ce que le dispositif de séparation de polarisation est un élément holographique en volume inséré entre deux prismes fonctionnant en réflexion pour une polarisation et en transmission pour l'autre polarisation incidente sous l'angle proche de l'angle de Brewster.

4.  Dispositif selon la revendication 1, caractérisé en ce que le dispositif de focalisation (HL) est un dispositif holographique permettant une focalisation de la lumière pour au moins une longueur d'onde du faisceau polarisé.

5.  Dispositif selon la revendication 4, caractérisé en ce que le dispositif holographique de focalisation (HL) permet plusieurs directions de focalisation selon les longueurs d'ondes contenues dans le faisceau polarisé.

**6.** Dispositif selon la revendication 4, caractérisé en ce que le dispositif holographique de focalisation (HL) est un dispositif holographique en volume.

**7.** Dispositif selon la revendication 3, caractérisé en ce que le dispositif holographique de séparation de polarisations (HP) est placé selon un plan sensiblement perpendiculaire au plan de l'écran.

**8.** Dispositif selon l'une quelconque des revendications précédentes, caractérisé en ce que l'écran est un écran modulateur spatial de lumière (LCD) recevant le faisceau focalisé par le dispositif de focalisation (HL).

**9.** Dispositif selon la revendication 8, caractérisé en ce que l'écran modulateur spatial de lumière est un écran à cristal liquide (LCD).

**10.** Dispositif de visualisation selon la revendication 9, caractérisé en ce que l'écran à cristal liquide (LCD) est disposé sensiblement parallèlement au dispositif holographique de focalisation (HL) dans un plan contenant les points de focalisation de ce dispositif (HL).

**11.** Dispositif selon l'une des revendications 3, 4 ou 7, caractérisé en ce que le dispositif holographique de polarisation (HP) et le dispositif holographique de focalisation (HL) sont associés par un prisme (PR).

**12.** Dispositif selon la revendication 9, caractérisé en ce que l'écran à cristal liquide (LCD) permet un fonctionnement à plusieurs couleurs, le dispositif holographique de focalisation (HL) étant enregistré pour focaliser les différentes longueurs d'ondes correspondant à différentes couleurs selon des directions différentes.

**13.** Dispositif selon la revendication 3, caractérisé en ce qu'un dispositif demi-onde est placé sur le trajet de l'un des faisceaux lumineux transmis par le dispositif holographique de séparation de polarisation.

**14.** Dispositif selon la revendication 9, caractérisé en ce que l'écran à cristal liquide (LCD) comporte une première et une deuxième parties associées respectivement à la première et à la deuxième partie du dispositif holographique de focalisation (HL), ces deux parties étant commandées en inverse.

**15.** Dispositif selon l'une des revendications 3 ou 4, caractérisé en ce que le dispositif holographique de séparation de polarisations et le dispositif holographique de focalisation sont réalisés en un seul dispositif holographique de traitement (HPL).

**16.** Dispositif selon la revendication 15, caractérisé en ce que le dispositif holographique de traitement (HPL) fonctionne en réflexion.

**17.** Dispositif de visualisation selon la revendication 16, caractérisé en ce qu'un dispositif holographique de réflexion est disposé entre l'écran (LCD) et le dispositif holograhique de traitement (HPL) pour transmettre le faisceau sous un angle approprié.

**18.** Dispositif selon l'une des revendications 3 ou 4, caractérisé en ce que :

- le dispositif de focalisation (HLD) est parallèle à l'écran (LCD) ;
- le dispositif de séparation de polarisations (HPD1) est à 45° environ du dispositif holographique de focalisation (HLD) et permet d'éclairer une première moitié de l'écran (LCD) par réflexion d'une polarisation d'un faisceau incident (F1) ;
- un dispositif de réflexion (HMD) permet d'éclairer une deuxième moitié de l'écran (LCD) par réflexion de l'autre polarisation du faisceau incident (F1) non réfléchie par le dispositif holographique de séparation de polarisations (HPD1).

**19.** Dispositif de visualisation comprenant plusieurs dispositifs selon la revendication 18, caractérisé en ce que plusieurs dispositifs sont placés en série sur la direction du faisceau incident (F1) et fonctionnent chacun à une gamme de longueurs d'ondes particulières.

**20.** Dispositif selon la revendication 19, caractérisé en ce qu'il comporte plusieurs écrans à cristaux liquides (LCDV, LCDR, LCDB) et une source d'éclairement de ces écrans, lesdits écrans étant placés à égale distance de la source d'une part, et à égale distance d'un objectif de projection (OP) d'autre part.

21. Dispositif selon l'une des revendications 1, 3 ou 4, caractérisé en ce que l'un au moins des dispositifs de séparation de polarisations ou de focalisation comporte des moyens pour induire un effet d'anamorphose sur un faisceau traité.

22. Dispositif selon l'une des revendications 3 ou 4, caractérisé en ce que l'un au moins des dispositifs holographiques comporte des moyens pour réaliser un effet de convergence ou de divergence d'un faisceau traité.

23. Dispositif selon la revendication 3, caractérisé en ce qu'une source (S) éclaire le dispositif de séparation de polarisation (HP$_i$) sous un angle différent de 45°, le réseau holographique enregistré dans le dispositif de séparation de polarisation faisant un angle de 45° avec la direction du faisceau d'éclairement venant de la source ce qui permet de réaliser une anamorphose du faisceau.

24. Dispositif selon la revendication 8, caractérisé en ce que les deux parties de l'écran (LCD) sont commandées en inverse.

25. Dispositif selon l'une quelconque des revendications précédentes, caractérisé en ce que le dispositif de focalisation est équivalent à une matrice de microlentilles.

**Patentansprüche**

1. Anzeigevorrichtung für die Bildprojektion,

    - mit einem Bildschirm, der zwei nebeneinander liegende Teile besitzt,
    - mit einer Polarisationstrennvorrichtung (HP), die so ausgebildet ist, daß sie einen nicht polarisierten Strahl empfängt und gemäß einem ersten Strahlverlauf das gemäß einer ersten Polarisationsrichtung polarisierte Licht durchläßt, während gemäß einem zweiten Strahlverlauf das gemäß einer zweiten Polarisationsrichtung senkrecht zur ersten Richtung polarisierte Licht reflektiert wird,
    - mit einer Fokussiervorrichtung (HL, HPL), von der ein Teil das von der Polarisationstrennvorrichtung durchgelassene Licht empfängt und auf den ersten Teil des Bildschirms fokussiert, während ein zweiter Teil dieser Vorrichtung das von der Polarisationstrennvorrichtung reflektierte Licht empfängt und auf den zweiten Teil des Bildschirms fokussiert.

2. Vorrichtung nach Anspruch 1, dadurch gekennzeichnet, daß die Fokussiervorrichtung die Ausbreitungsrichtungen des zum ersten Teil des Bildschirms übertragenen Lichts und des zum zweiten Teil des Bildschirms übertragenen Lichts so ausrichtet, daß diese Richtungen im wesentlichen parallel verlaufen.

3. Vorrichtung nach Anspruch 1, dadurch gekennzeichnet, daß die Polarisationstrennvorrichtung ein volumen-holographisches Element ist, das zwischen zwei Prismen eingefügt ist und für eine Polarisation reflektierend und für die andere ankommende Polarisation unter einem Winkel nahe dem Brewster-Winkel durchlassend wirkt.

4. Vorrichtung nach Anspruch 1, dadurch gekennzeichnet, daß die Fokussiervorrichtung (HL) eine holographische Vorrichtung ist, mit der das Licht für mindestens eine Wellenlänge des polarisierten Lichts fokussiert werden kann.

5. Vorrichtung nach Anspruch 4, dadurch gekennzeichnet, daß die holographische Fokussiervorrichtung (HL) mehrere Fokussierrichtungen entsprechend den in dem polarisierten Lichtstrahl enthaltenen Wellenlängen erlaubt.

6. Vorrichtung nach Anspruch 4, dadurch gekennzeichnet, daß die holographische Fokussiervorrichtung (HL) eine volumenholographische Vorrichtung ist.

7. Vorrichtung nach Anspruch 3, dadurch gekennzeichnet, daß die holographische Polarisationstrennvorrichtung (HP) in einer Ebene liegt, die im wesentlichen senkrecht zur Bildschirmebene verläuft.

8. Vorrichtung nach einem beliebigen der vorstehenden Ansprüche, dadurch gekennzeichnet, daß der Bildschirm ein Bildschirm mit einer räumlichen Lichtmodulation (LCD) ist, der den von der Fokussiervorrichtung (HL) fokussierten Strahl empfängt.

9. Vorrichtung nach Anspruch 8, dadurch gekennzeichnet, daß der Bildschirm mit räumlicher Lichtmodulation ein Flüssigkristallschirm (LCD) ist.

10. Anzeigevorrichtung nach Anspruch 9, dadurch gekennzeichnet, daß der Flüssigkristallschirm (LCD) im wesentlichen parallel zur holographischen Fokussiervorrichtung (HL) in einer Ebene liegt, die die Brennpunkte dieser Vorrichtung (HL) enthält.

11. Vorrichtung nach einem der Ansprüche 3, 4 oder 7, dadurch gekennzeichnet, daß die holographische Polarisationsvorrichtung (HP) und die holographische Fokussiervorrichtung (HL) in einem Prisma (PR) vereint sind.

12. Vorrichtung nach Anspruch 9, dadurch gekennzeichnet, daß der Flüssigkristallschirm (LCD) einen Betrieb mit mehreren Farben erlaubt, wobei das Hologramm der Fokussiervorrichtung (HL) so aufgezeichnet ist, daß die verschiedenen Wellenlängen entsprechend den verschiedenen Farben gemäß unterschiedlichen Richtungen fokussiert werden.

13. Vorrichtung nach Anspruch 3, dadurch gekennzeichnet, daß eine $\lambda/2$-Vorrichtung im Verlauf eines der Lichtstrahlen liegt, die von der holographischen Polarisationstrennvorrichtung übertragen werden.

14. Vorrichtung nach Anspruch 9, dadurch gekennzeichnet, daß der Flüssigkristallschirm (LCD) zwei Teile besitzt, die dem ersten beziehungsweise zweiten Teil der holographischen Fokussiervorrichtung (HL) zugeordnet sind und invers gesteuert werden.

15. Vorrichtung nach einem der Ansprüche 3 oder 4, dadurch gekennzeichnet, daß die holographische Polarisationstrennvorrichtung und die holographische Fokussiervorrichtung in einer gemeinsamen holographischen Bearbeitungsvorrichtung (HPL) realisiert sind.

16. Vorrichtung nach Anspruch 15, dadurch gekennzeichnet, daß die holographische Bearbeitungsvorrichtung (HPL) im Reflexionsmodus arbeitet.

17. Anzeigevorrichtung nach Anspruch 16, dadurch gekennzeichnet, daß eine holographische Reflexionsvorrichtung zwischen dem Schirm (LCD) und der holographischen Bearbeitungsvorrichtung (HPL) liegt, um den Strahl unter einem geeigneten Winkel zu übertragen.

18. Vorrichtung nach einem der Ansprüche 3 oder 4, dadurch gekennzeichnet, daß

- die Fokussiervorrichtung (HLD) parallel zum Schirm (LCD) liegt;
- die Polarisationstrennvorrichtung (HPD1) unter etwa 45 zur holographischen Fokussiervorrichtung (HLD) geneigt ist und eine erste Hälfte des Bildschirms (LCD) durch Reflexion einer Polarisation eines ankommenden Strahls (F1) zu beleuchten vermag;
- eine Reflexionsvorrichtung (HMD) eine zweite Hälfte des Bildschirms (LCD) durch Reflexion der anderen Polarisation des ankommenden Lichtstrahls (F1) zu beleuchten vermag, die nicht durch die holographische Polarisationstrennvorrichtung (HPD1) reflektiert wurde.

19. Anzeigevorrichtung mit mehreren Vorrichtungen nach Anspruch 18, dadurch gekennzeichnet, daß mehrere Vorrichtungen in der Richtung des einfallenden Strahls (F1) hintereinander angeordnet sind und je für einen eigenen Wellenlängenbereich wirksam sind.

20. Vorrichtung nach Anspruch 19, dadurch gekennzeichnet, daß sie mehrere Flüssigkristallschirme (LCDV, LCDR, LCDB) sowie eine Quelle zur Beleuchtung dieser Schirme besitzt, wobei die Schirme gleiche Abstände von der Quelle einerseits und gleiche Abstände von einem Projektionsobjektiv (OP) andrerseits haben.

21. Vorrichtung nach einem der Ansprüche 1, 3 oder 4, dadurch gekennzeichnet, daß mindestens eine der Polarisationstrennvorrichtungen oder Fokussiervorrichtungen Mittel besitzt, um den behandelten Strahl einer Anamorphose zu unterwerfen.

22. Vorrichtung nach einem der Ansprüche 3 oder 4, dadurch gekennzeichnet, daß mindestens eine der holographischen Vorrichtungen Mittel besitzt, um eine Konvergenz- oder Divergenzwirkung auf einen behandelten Strahl auszuüben.

**23.** Vorrichtung nach Anspruch 3, dadurch gekennzeichnet, daß die Quelle (S) die Polarisationstrennvorrichtung (HP$_i$) unter einem Winkel ungleich 45° beleuchtet, wobei das in der Polarisationstrennvorrichtung aufgezeichnete holographische Gitter einen Winkel von 45° mit der Richtung des von der Quelle kommenden Beleuchtungsstrahls einschließt, wodurch eine Anamorphose des Strahls erreicht wird.

**24.** Vorrichtung nach Anspruch 8, dadurch gekennzeichnet, daß die beiden Teile des Bildschirms (LCD) invers gesteuert werden.

**25.** Vorrichtung nach einem beliebigen der vorstehenden Ansprüche, dadurch gekennzeichnet, daß die Fokussiervorrichtung einer Matrix von Mikrolinsen äquivalent ist.

**Claims**

**1.** Display device for projecting images, which includes

- a screen having a first part and a second part which are juxtaposed;
- a polarization-splitting device (HP) arranged to receive an unpolarized beam and transmitting, along a first path, the light polarized along a first polarization direction and reflecting, along a second path, the light polarized in a second polarization direction orthogonal to the first direction;
- a focusing device (HL, HPL), one part of which receives the light transmitted by the polarization-splitting device and focuses it onto the first part of the screen and another part of which receives the light reflected by the polarization-splitting device and focuses it onto the second part of the screen.

**2.** Device according to Claim 1, characterized in that the focusing device orients the directions of propagation of the light transmitted to the first part of the screen and that transmitted to the second part of the screen in such a way that these directions are approximately parallel to each other.

**3.** Device according to Claim 1, characterized in that the polarization-splitting device is a holographic volume element inserted between two prisms operating in reflection mode for one polarization and in transmission mode for the other polarization incident at an angle close to the Brewster angle.

**4.** Device according to Claim 1, characterized in that the focusing device (HL) is a holographic device enabling the light to be focused for at least one wavelength of the polarized beam.

**5.** Device according to Claim 4, characterized in that the holographic focusing device (HL) permits several focusing directions according to the wavelengths contained in the polarized beam.

**6.** Device according to Claim 4, characterized in that the holographic focusing device (HL) is a volume holographic device.

**7.** Device according to Claim 3, characterized in that the holographic polarization-splitting device (HP) is placed in a plane substantially perpendicular to the plane of the screen.

**8.** Device according to any one of the preceding claims, characterized in that the screen is a spatially light-modulating screen (LCD) receiving the beam focused by the focusing device (HL).

**9.** Device according to Claim 8, characterized in that the spatially light-modulating screen is a liquid-crystal screen (LCD).

**10.** Display device according to Claim 9, characterized in that the liquid-crystal screen (LCD) is disposed substantially parallel to the holographic focusing device (HL) in a plane containing the focusing points of this device (HL).

**11.** Device according to one of Claims 3, 4 or 7, characterized in that the holographic polarization device (HP) and the holographic focusing device (HL) are combined by a prism (PR).

**12.** Device according to Claim 9, characterized in that the liquid-crystal screen (LCD) permits operation with various colours, the holographic focusing device (HL) being recorded in order to focus the various wavelengths corresponding to various colours along different directions.

13. Device according to Claim 3, characterized in that a half-wave device is placed in the path of one of the light beams transmitted by the holographic polarization-splitting device.

14. Device according to Claim 9, characterized in that the liquid-crystal screen (LCD) comprises a first and a second portion which are respectively combined with the first and the second portion of the holographic focusing device (HL), these two portions being actuated in a reverse manner.

15. Device according to either of Claims 3 and 4, characterized in that the holographic polarization-splitting device and the holographic focusing device are produced in a single holographic processing device (HPL).

16. Device according to Claim 15, characterized in that the holographic processing device (HPL) operates in reflection mode.

17. Display device according to Claim 16, characterized in that a holographic reflection device is disposed between the screen (LCD) and the holographic processing device (HPL) in order to transmit the beam at an appropriate angle.

18. Device according to either of Claims 3 and 4, characterized in that:

   - the focusing device (HLD) is parallel to the screen (LCD);
   - the polarization-splitting device (HPD1) is at approximately 45° to the holographic focusing device (HLD) and enables a first half of the screen (LCD) to be illuminated by reflection of one polarization of an incident beam (F1);
   - a reflection device (HMD) enables a second half of the screen (LCD) to be illuminated by reflection of the other polarization of the incident beam (F1) not reflected by the holographic polarization-separating device (HPD1).

19. Display device comprising several devices according to Claim 18, characterized in that several devices are placed in series in the direction of the incident beam (F1) and each operates at a particular wavelength band.

20. Device according to Claim 19, characterized in that it comprises several liquid-crystal screens (LCDG, LCDR, LCDB) and a source for illuminating these screens, the said screens being placed, on the one hand, at an equal distance from the source and, on the other hand, at an equal distance from a projection objective (OP).

21. Device according to one of Claims 1, 3 or 4, characterized in that at least one of the polarization-splitting or focusing devices comprises means for inducing an anamorphosis effect on a processed beam.

22. Device according to either of Claims 3 and 4, characterized in that at least one of the holographic devices comprises a means for producing a convergence or divergence effect of a processed beam.

23. Device according to Claim 3, characterized in that a source (S) illuminates the polarization-splitting device ($HP_i$) at an angle different from 45°, the holographic grating recorded in the polarization-splitting device making an angle of 45% with the direction of the illuminating beam coming from the source which enables an anamorphosis of the beam to be produced.

24. Device according to Claim 8, characterized in that the two parts of the screen (LCD) are driven inversely.

25. Device according to any one of the preceding claims, characterized in that the focusing device is equivalent to a matrix of microlenses.

FIG.1

FIG.2

FIG. 3

FIG. 4a

$\lambda_i = 0{,}55\,\mu m$

$R\perp = 100\,\%$

$R_{//} = 0{,}1\,\%$

FIG. 4b

$\lambda = \lambda_i + \Delta\lambda$
$\Delta\lambda = 20\,nm$

$R\perp = 100\,\%$

$R_{//}$

FIG. 4c

EP 0 512 099 B1

COMPOSANTE BLEUE
$\lambda_B = 0{,}46\,\mu m$

FIG. 5a

COMPOSANTE VERTE
$\lambda_V = 0{,}55\,\mu m$

FIG. 5b

COMPOSANTE ROUGE
$\lambda_R = 0{,}68\,\mu m$

FIG. 5c

FIG.6

LCD    HL    λ/2

HM2    HPL

r
v
b

écran
LCD

M    HM1

PR

FIG.7

F1

PR1

HP

PR2

S

# FIG.8a

REFLEXION
Type HR

$\nu_2 > \nu_1 \implies \Delta\theta_1 > \Delta\theta_2$

TRANSMISSION
Type HT

$\nu_2 > \nu_1$

$V \equiv d.\Delta n = cote$    $\Delta\theta$ Réflexion    $\Delta\theta$ Transmission
$\Delta\lambda$ Réflexion    $\Delta\lambda$ Transmission

# FIG.8b

FIG.10

FIG.9

EP 0 512 099 B1

# FIG.11

HL

HP

FA

LCD  λ/2  LBR  CU  H1

FB, FR

# FIG. 12

HPR  HPB  HPV  OP

LCDR

R

B

P V

D'3

MR

LCDB

D'2

LCDV

MBR

D'1

S

# FIG.13